(19) Europäisches Patentamt
European Patent Office
Office européen des brevets

(11) **EP 2 327 535 B1**

## (12) EUROPÄISCHE PATENTSCHRIFT

(45) Veröffentlichungstag und Bekanntmachung des Hinweises auf die Patenterteilung:
**07.08.2013  Patentblatt 2013/32**

(51) Int Cl.:
*G01N 29/12* (2006.01)       *G01N 29/30* (2006.01)
*B29C 67/00* (2006.01)

(21) Anmeldenummer: **10192356.3**

(22) Anmeldetag: **24.11.2010**

(54) **Verfahren zum Herstellen eines dreidimensionalen Objekts**

Method for manufacturing a 3D object

Procédé de fabrication d'un objet tridimensionnel

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2009  DE 102009055661**

(43) Veröffentlichungstag der Anmeldung:
**01.06.2011  Patentblatt 2011/22**

(73) Patentinhaber: **EOS GmbH Electro Optical Systems**
**82152 Krailling (DE)**

(72) Erfinder:
• **Philippi, Jochen**
  **82166, Gräfelfing (DE)**
• **Schilling, Alexander**
  **81377, München (DE)**

(74) Vertreter: **Prüfer & Partner GbR**
**European Patent Attorneys**
**Sohnckestrasse 12**
**81479 München (DE)**

(56) Entgegenhaltungen:
**EP-A1- 1 486 317**

• **F M Bai, D L Yang, X C Wu, H C Zhang: "ACOUSTICAL TEST INSTRUMENT OF MECHANICAL PROPERTIES WITH SHAFT WORK PIECES", Journal of Physics: Conference Series 48 , 31. Dezember 2006 (2006-12-31), Seiten 629-634, XP002617685, DOI: 10.1088/1742-6596/48/1/118 Gefunden im Internet: URL:http://iopscience.iop.org/ 1742-6596/48 /1/118/pdf/jpconf6_48_118.pdf [gefunden am 2011-01-18]**
• **Richard W. Bono, Mark I. Schiefer, Gail R. Stultz: "RESONANT INSPECTION AS AN AUTOMATED NDT METHOD FOR SINTER BRAZED POWDER METAL COMPONENTS", , 31. Dezember 2007 (2007-12-31), XP002617686, Gefunden im Internet: URL:http://www.modalshop.com/ filelibrary/R esonant%20Inspection%20Sinter- Braze%20Appl ication%20(SAE).pdf [gefunden am 2011-01-18]**

**Beschreibung**

Die Erfindung betrifft ein Verfahren zum Herstellen eines dreidimensionalen Objekts nach Patentanspruch 1. Insbesondere betrifft die Erfindung ein Verfahren zum Lasersintern von Bauteilen.

Das selektive Lasersintern wird in zunehmendem Umfang nicht mehr nur für die Herstellung von Prototypen oder von Kleinserien von Bauteilen verwendet, sondern für die Serienfertigung von voll funktionsfähigen Bauteilen. Die hergestellten Bauteile haben in der Regel eine Qualitätskontrolle zu durchlaufen, wobei insbesondere ihre mechanischen Eigenschaften geprüft werden. Die mechanischen Eigenschaften von Bauteilen, wie z. B. der E-Modul, können jedoch bisher nur schwer vermessen werden, da die dazu notwendige Apparatur aufwendig ist.

Der Anmelderin ist bekannt, daß Testkörper, wie z.B. Zugstäbe, mit dem Lasersinterverfahren hergestellt werden können und anschließend mechanisch vermessen werden können, um Informationen über die Eigenschaften wie z.B. den Elastizitäts-Modul eines herzustellenden Bauteils zu erhalten, die von den Prozeßbedingungen beim Lasersintern und vom Material abhängen können.

Aus der EP 1 486 317 A1 ist es bekannt, zusammen mit dem herzustellenden Bauteil mindestens einen iterativen Verbesserungsprüfkörper herzustellen, der z.B. Z-Dehnungsanordnungen, Dichtewürfel, Dimensionspyramiden, Biegeproben oder Kombinationen hiervon beinhalten kann. Mittels eines zerstörenden Prüfverfahrens an den iterativen Verbesserungsprüfkörpern werden dann in einem iterativen Verfahren Datensätze für eine optimale Herstellung des eigentlichen Produktionsteils erhalten. Das Verfahren ist sehr aufwendig.

Es ist Aufgabe der Erfindung, ein Verfahren zum Herstellen eines dreidimensionalen Objekts, insbesondere ein Lasersinterverfahren, bereitzustellen, welches ein einfaches, schnelles und präzises Ermitteln von insbesondere mechanischen Eigenschaften der Bauteile erlaubt.

Die Aufgabe wird gelöst durch ein Verfahren gemäß Patenanspruch 1. Weiterbildungen der Erfindung sind in den Unteransprüchen angegeben.

Weitere Merkmale und Zweckmäßigkeiten der Erfindung ergeben sich aus der Beschreibung von Ausführungsbeispielen anhand der Figuren. Von den Figuren zeigen:

Fig. 1    eine schematische Darstellung einer Lasersintervorrichtung als Beispiel für eine Vorrichtung zum Herstellen eines dreidimensionalen Objekts;

Fig. 2    eine vergrößerte Darstellung eines Testkörpers auf einer Bauplattform für eine Lasersintervorrichtung als Beispiel für eine Ausführungsform des Verfahrens;

Fig. 3    einen vergrößerten Ausschnitt aus Fig. 2 mit schematisch angedeuteten Schwingungen des Testkörpers;

Fig. 4    ein Frequenzdiagramm mit einer ersten Eigenfrequenz des Testkörpers gemäß Fig. 3; und

Fig. 5    ein beispielhaftes Frequenzdiagramm eines zweiten Testkörpers.

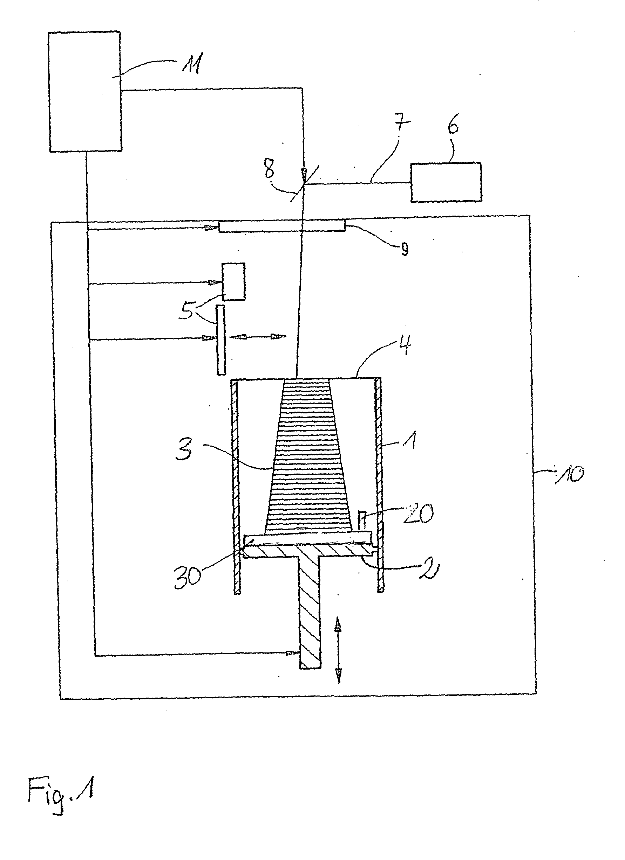

In Fig. 1 ist eine Lasersintervorrichtung als Beispiel einer Vorrichtung zum schichtweisen Herstellen eines dreidimensionalen Objekts mittels eines generativen Fertigungsverfahrens schematisch dargestellt. Die Vorrichtung weist einen nach oben hin offenen Behälter 1 mit einem darin in vertikaler Richtung bewegbaren Träger 2 auf, der das zu bildende Objekt trägt und ein Baufeld definiert. Der Träger 2 wird in vertikaler Richtung so eingestellt, daß die jeweils zu verfestigende Schicht des Objekts in einer Arbeitsebene 4 liegt. Weiter ist ein Beschichter 5 zum Aufbringen des durch elektromagnetische Strahlung verfestigbaren pulverförmigen Aufbaumaterials vorgesehen. Als Quelle der elektromagnetischen Strahlung ist ein Laser 6 vorgesehen. Der durch den Laser 6 erzeugte Laserstrahl 7 wird durch eine Ablenkeinrichtung 8 auf ein Einkoppelfenster 9 gelenkt und von diesem in die Prozeßkammer 10 hindurchgelassen und in einem vorbestimmten Punkt in der Arbeitsebene fokussiert. Es ist ferner eine Steuereinheit 11 vorgesehen, über die die Bestandteile der Vorrichtung in koordinierter Weise zum Durchführen des Bauprozesses gesteuert werden. Die Steuerung wird unter anderem in Abhängigkeit von CAD-Daten des herzustellenden Objekts betrieben.

Als pulverförmiges Aufbaumaterial können alle für das Lasersinterverfahren geeigneten Pulver bzw. Pulvermischungen verwendet werden. Solche Pulver umfassen z.B. Kunststoffpulver wie Polyamid oder Polystyrol, PEEK, Metallpulver wie Edelstahlpulver oder andere, dem jeweiligen Zweck angepaßte Metallpulver, insbesondere Legierungen, kunststoffbeschichteter Sand oder Keramikpulver. Der Betrieb der Lasersintervorrichtung erfolgt so, daß der Beschichter 5 über das Baufeld fährt und eine Pulverschicht mit einer vorbestimmten Dikke aufbringt. Anschließend wird mit dem Laserstrahl der Querschnitt des Objekts 3 in der jeweiligen Schicht bestrahlt und das Pulver dort verfestigt. Dann wird der Träger 2 abgesenkt und eine neue Pulverschicht aufgebracht. Die Herstellung des Objekts 3 erfolgt auf diese Weise Schicht für Schicht. Nach Fertigstellung wird das Objekt entnommen und gegebenenfalls nachbehandelt und/oder einer Qualitätskontrolle unterzogen.

Bei dem erfindungsgemäßen Verfahren wird nach einer ersten Ausführungsform, wie in Fig. 1 schematisch dargestellt ist, ein Testkörper 20 beim Aufbau des eigentlich herzustellenden Objekts 3 mitgebaut. Dieser Testkörper 20 wird nach Herstellung des Objekts 3 zu Schwingungen angeregt und dann die Eigenfrequenzen des schwingenden Körpers 20 bestimmt. Hieraus werden dann Eigenschaften des hergestellten Objekts 3, wie beispielsweise der Elastizitäts-Modul, bestimmt. Die CAD-Daten, die die Geometrie des Testkörpers enthalten, können im selben Datensatz enthalten sein, der die Objektdaten enthält, oder sie können z.B. aus einer Bibliothek ausgewählt werden und hinzugefügt werden.

Der Testkörper 20 kann irgendwo an einer geeigneten Stelle in dem durch die Behälterwand und dem Träger definierten Bauraum aufgebaut werden. Er muß nicht mit dem Träger 2 und/oder dem Objekt 3 verbunden werden. In einer bevorzugten Ausgestaltung des Verfahrens wird der Testköper 20 nicht frei im Bauraum aufgebaut, sondern auf einer auf dem Träger 2 lösbar befestigten Unterlage 30 aufgebaut, mit der der Testkörper 20 sowie das herzustellende Objekt 3 verbunden ist, und die nach Fertigstellung des Objekts zusammen mit dem Objekt und dem Testkörper aus der Vorrichtung entnommen wird. Das Objekt 3 kann beispielsweise über (nicht dargestellte) Stützstrukturen mit Sollbruchstellen mit der lösbar befestigten Unterlage 30 verbunden sein, so daß nach Herausnehmen der Unterlage das Objekt einfach abgetrennt werden kann, wobei der Testkörper 20 auf der Unterlage 30 verbleibt. Diese Vorgehensweise ist insbesondere für das Sintern von Metallpulver geeignet.

Anschließend wird der Testkörper 20 mechanisch zu Schwingungen angeregt. Die Anregung des Testkörpers kann beispielsweise durch Schläge per Hand in der gewünschten Schwingungsrichtung oder in einem automatisierten Teststand erfolgen. Die sich bildenden Eigenschwingungen des Testkörpers 20 werden sodann mit einem akustischen oder optischen Verfahren, wie weiter unten beschrieben, ermittelt. Da in dem bevorzugten Ausführungsbeispiel der Testkörper 20 mit der Unterlage verbunden ist, entfällt die Notwendigkeit eines Einspannens des Testkörpers. Die Unterlage 30 hat eine solche Masse, daß die Eigenschwingungen des Testkörpers durch sie nicht beeinflußt werden. Bei Vergleichsmessungen, z.B. bei Vergleich einer gemessenen Frequenz mit der eines Referenzkörpers werden ansonsten identische Meßbedingungen, z.B. hinsichtlich der Temperatur etc., verwendet.

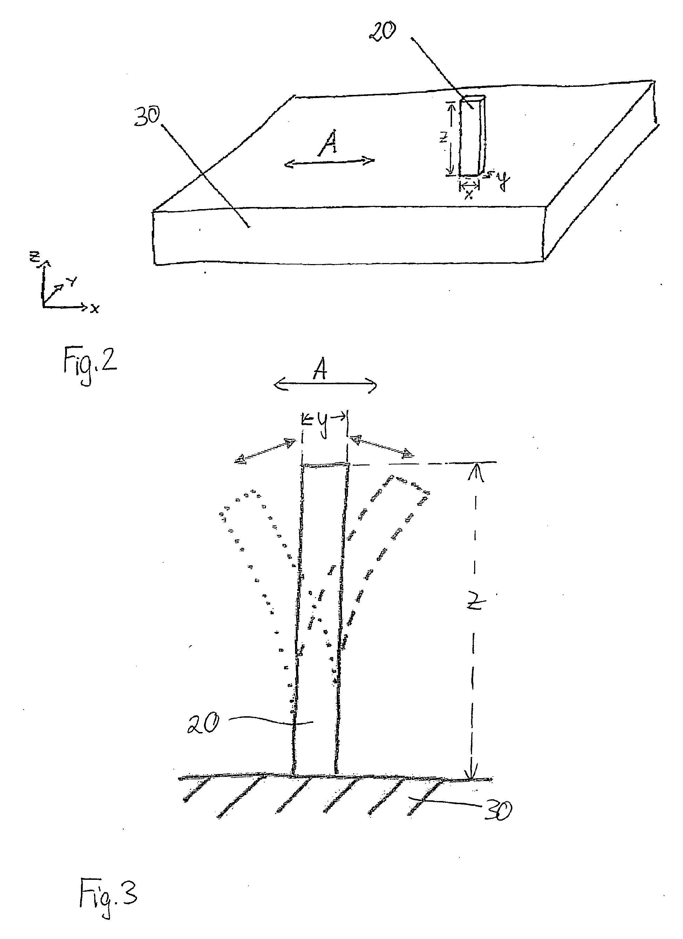

Der Testkörper ist vorzugsweise ein Körper mit einer einfachen Geometrie, insbesondere hat er eine oder nur wenige dominante Eigenschwingungsmoden. In dem gezeigten Ausführungsbeispiel ist der Testkörper als Flachstab oder Balken mit im wesentlichen rechteckigem Querschnitt ausgebildet, der, wie in den Fig. 2 und 3 ersichtlich ist, eine Höhe z und eine Dicke y sowie eine Breite x aufweist. Der Flachstab weist eine Breite x auf, die größer als die Dicke y ist.

Der Beschichter trägt eine neue Schicht abwechselnd bei der Fahrt über das Baufeld in einer Richtung bzw. in der entgegengesetzten Richtung auf. In Fig. 2 sind die Richtungen A, in die der Beschichter das Pulvermaterial bei seiner Fahrt über das Baufeld aufträgt, durch einen Doppelpfeil gekennzeichnet. Die Orientierung des Testköpers 20 auf der Unterlage 30 ist derart, daß die in Fig. 3 gezeigte Hauptschwingungsrichtung rechtwinklig oder im wesentlichen rechtwinklig zur Beschichtungsrichtung in der Beschichterebene ist. Der gezeigte Flachstab wird als Testkörper vorzugsweise so aufgebaut, daß seine Schmalseite in Beschichtungsrichtung orientiert ist.

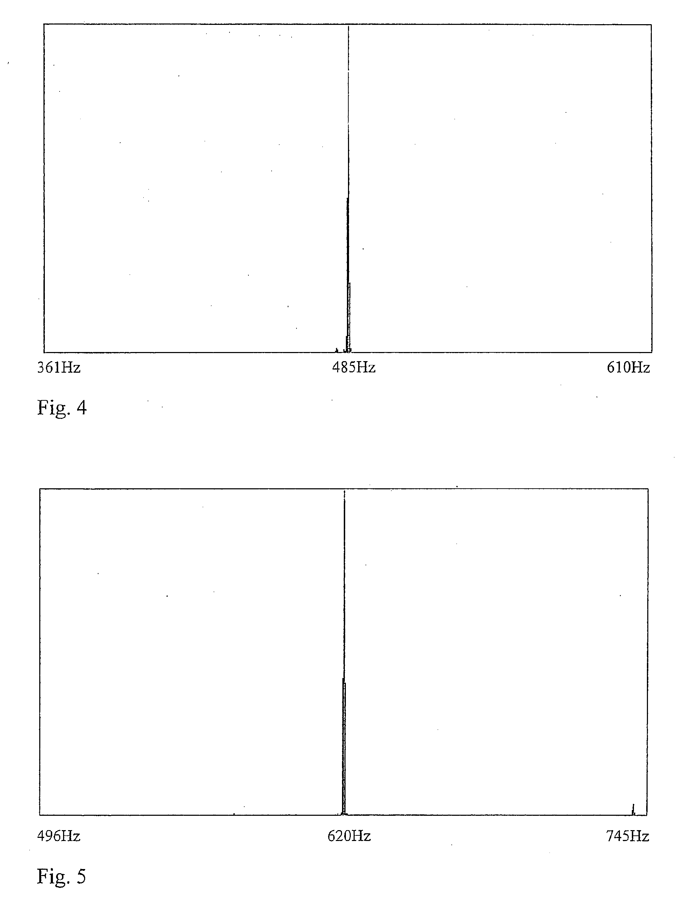

Bei der akustischen Ermittlung der Eigenfrequenzen werden die durch die Schwingungen des Testkörpers erzeugten Klangfolgen aufgenommen und ausgewertet. Beispielsweise kann eine Audiodatei digital aufgenommen werden und mittels einer üblichen Spektrumsanalyse analysiert werden, wodurch die Frequenzen der Eigenschwingungen erhalten werden. In den Fig. 4 und 5 sind Ausschnitte eines Frequenzdiagramms beispielhaft für einen Flachstab als Testkörper 20 und Lasersintern von Metallpulver gezeigt. Die Eigenfrequenzen können im Bereich bis ca. 5.000Hz liegen, gute Ergebnisse werden aber besonders im Bereich von weniger als 1.000Hz erreicht. Diese sind bei gleichen Abmessungen ein Maß für Materialeigenschaften, wie z.B. die Dichte und die Steifigkeit bzw. für Maßabweichungen der Bauteile. Eine höhere Steifigkeit führt zu einer höheren Frequenz, eine Erhöhung der Dichte oder der Abmessungen führt zu einer Verringerung der Frequenz. Für ideal elastische Balken ist die Eigenfrequenz wie folgt definiert:

$$f_1 = c_1 \cdot \sqrt{\frac{E}{\rho}}$$

$$mit$$

$$c_1 = \frac{3{,}52}{4\pi \cdot \sqrt{3}} \cdot \frac{y}{z^2}$$

wobei $\rho$ die Dichte des Balkens, z die Höhe und y die Dicke des Balkens ist. E ist der Elastizitätsmodul. Im wesentlichen hängt für einen ideal elastischen Balken die Eigenfrequenz nicht von der Breite x ab. Daher kann, für den Fall, daß der Testkörper 20, wie in den Fig. 2 und 3 gezeigt ist, als im wesentlichen idealer elastischer Balken ausgebildet ist, die Breite des Balkens x relativ groß gewählt werden, so daß der Testkörper nicht beschädigt wird, wenn der Beschichter eine neue Schicht aufbringt.

Durch die Ermittlung der Eigenfrequenzen ist es möglich, auf eine Mehrzahl von Eigenschaften - zunächst des Testkörpers -, im weiteren aber des hergestellten Objekts zu schließen. Aus den Abmaßen und einer Dichtemessung kann bei einfachen Geometrien aus der Frequenzmessung direkt auf den Elastizitäts-Modul E des verwendeten Aufbaumaterials geschlossen werden. Im Falle komplexer Testkörper, wie z.B. in Glokkenform läßt sich eine Rückführung dieser Eigenschaften unter Nutzung eines Finite-Elemente-Programms zur Eigenmodenanalyse bestimmen. Frequenzabweichungen zu einem zuvor vermessenen Referenzkörper ergeben sich auch bei Materialinhomogenitäten, Materialalterung, Exzentrizitäten, Rissen, Bindefehlern, etc. Es ist auch beispielsweise denkbar, Rückschlüsse auf Beschichtungsfehler in einer oder mehrerer Schichten zu ziehen.

Gemäß der ersten Ausführungsform des Verfahrens wird eine Qualitätsbeurteilung des hergestellten Objekts anhand der Vermessung der Eigenfrequenzen eines mitgebauten Testkörpers von einfacher Geometrie durchgeführt. Die Ergebnisse können dazu dienen, das hergestellte Objekt bezüglich seiner Eigenschaften und damit seiner Qualität zu beurteilen und gegebenenfalls Korrekturmaßnahmen beim Aufbau des nächsten Objekts vorzunehmen.

In einer Abwandlung der ersten Ausführungsform erfolgt die Ermittlung der Eigenfrequenzen nicht akustisch, sondern optisch. Hierzu wird mittels beispielsweise einer berührungslosen Geschwindigkeitsmeßeinrichtung die Schwingung des Testkörpers aufgezeichnet und danach mittels bekannter Methoden ausgewertet, um die Eigenfrequenzen zu erhalten.

In einer noch weiteren Abwandlung kann, speziell wenn als Aufbaumaterial ein metallisches Pulvermaterial verwendet wird, die Aufzeichnung der Schwingungen auch induktiv erfolgen.

In einer weiteren Abwandlung wird der Testkörper frei im Bauraum getrennt von der Trägerplatte und getrennt vom herzustellenden Objekt mitgebaut und anschließend entnommen sowie eingespannt und dann zu Schwingungen angeregt.

In einer noch weiteren Abwandlung ist der Testkörper auf oder an dem herzustellenden Objekt vorgesehen und wird beim Aufbau desselben mitgebaut. Nach Messung der Freuquenzen wird der Testkörper vom Objekt entfernt.

In einer noch weiteren Abwandlung werden mehrere Testkörper an verschiedenen Stellen des Bauraums mitgebaut. Dabei ist es möglich, Inhomogenitäten, die von Einflüssen im Bauraum herrühren, ausfindig zu machen.

In einer noch weiteren Abwandlung kann die Ermittlung der Eigenfrequenzen dazu verwendet werden, Rückschlüsse auf das Aufbaumaterial zu ziehen. Dies kann beispielsweise im Falle von Legierungen bei pulverförmigem Aufbaumaterial von Nutzen sein.

In einer noch weiteren Abwandlung werden anstelle von Flachstäben oder Balken andere Testkörper gebaut, die ein eigenschwingungsarmes Spektrum zeigen. Solche Testkörper können beispielsweise Stimmgabeln, Glocken oder Ähnliches sein.

Gemäß einer zweiten Ausführungsform des Verfahrens wird der Testkörper nicht zusammen beim Herstellen des gewünschten Objektes mitgebaut, sondern zur Qualitätsbestimmung und Kalibrierung der Lasersintervorrichtung verwendet und getrennt von dem eigentlichen Objekt in einem separaten Bauvorgang aufgebaut. Hierzu werden ein oder mehrere Testkörper vor Beginn eines Serienjobs gebaut und ihr Eigenfrequenzspektrum analysiert und mit dem eines Referenzkörpers verglichen. Anschließend werden die Parameter der Lasersintervorrichtung entsprechend justiert, so daß die herzustellenden Objekte die gewünschten Eigenschaften haben. Eine Überprüfung kann durch einen Mitbau von Testkörpern bei der Serienproduktion erfolgen.

Das Verfahren ist nicht auf das Lasersinterverfahren beschränkt. Es ist anwendbar bei allen Schichtbauverfahren, wie z.B. der Stereolithographie, die anstelle einen pulverförmigen Materials ein flüssiges, lichtaushärtbares Harz verwendet, beim dreidimensionalen Drucken, bei dem das pulverförmige Aufbaumaterial durch einen Binder, der z.B. als Tröpfchenpartikel auf die Pulverschicht aufgetragen wird, an den dem Objekt entsprechenden Stellen selektiv verfestigt wird oder auch beim selektiven Maskensintern, bei dem anstelle eines Laserstrahls eine Maske und eine ausgedehnte Lichtquelle verwendet werden. Als weiteres Schichbauverfahren bei dem das erfindungsgemäße Verfahren anwendbar ist, ist das sogenannte FDM-Verfahren (Fused Deposition Modeling) oder ähnliche Verfahren denkbar.

**Patentansprüche**

1. Verfahren zum Herstellen eines dreidimensionalen Objekts, bei dem das Objekt schichtweise aus einem zu verfestigenden Aufbaumaterial aufgebaut wird, wobei ein Testkörper (20) gebaut wird,

   **dadurch gekennzeichnet, dass**
   der Testkörper (20) auf einer herausnehmbaren Bauplattform (30) oder an bzw. auf dem herzustellenden Objekt (3) aufgebaut wird, mit der bzw. mit dem er verbunden ist und dass er nach Fertigstellung auf der Bauplattform oder dem Objekt zu mechanischen Schwingungen angeregt wird und Eigenfrequenzen der Schwingungen ermittelt werden, wobei aus den ermittelten Eigenfrequenzen des Testkörpers (20) Materialeigenschaften des herzustellenden Bauteils (3) ermittelt werden.

2. Verfahren nach Anspruch 1, **dadurch gekennzeichnet, dass** Eigenfrequenzen akustisch und/oder optisch und/oder induktiv ermittelt werden.

3. Verfahren nach Anspruch 1 oder 2, **dadurch gekennzeichnet, dass** der Testkörper (20) eine Geometrie aufweist, die eine oder wenige dominante Eigenschwingungsmoden hat.

4. Verfahren nach einem der Ansprüche 1 bis 3, **dadurch gekennzeichnet, dass** der Testkörper (20) ein Stab vorzugsweise mit rechteckigem Querschnitt ist.

5. Verfahren nach einem der Ansprüche 1 bis 4, **dadurch gekennzeichnet, dass** wenigstens eine ermittelte Eigenfrequenz des Testkörpers (20) mit einer bekannten Eigenfrequenz eines Referenzkörpers verglichen wird.

6. Verfahren nach einem der Ansprüche 1 bis 5, **dadurch gekennzeichnet, dass** aus den ermittelten Eigenfrequenzen Eigenschaften des Testkörpers (20), des Bauprozesses und/oder der Bauvorrichtung ermittelt werden.

7. Verfahren nach einem der Ansprüche 1 bis 6, **dadurch gekennzeichnet, dass** das Aufbaumaterial in einer Richtung oder in der entgegengesetzten Richtung aufgetragen wird und der Testkörper so aufgebaut wird, dass seine Hauptschwingungsrichtung im wesentlichen rechtwinklig zur Beschichtungsrichtung in der Beschichterebene orientiert ist.

8. Verfahren nach einem der Ansprüche 1 bis 7, **dadurch gekennzeichnet, dass** bei einer akustischen Frequenzanalyse eine Audiodatei erzeugt wird und eine Fouriertransformation zur Bestimmung der Eigenfrequenzen durchgeführt wird.

9. Verfahren nach einem der Ansprüche 1 bis 8, **dadurch gekennzeichnet, dass** bei einer optischen Frequenzanalyse die Schwingungen des Körpers berührungslos z.B. mit einem schnellen Abstandsmesser, gemessen und aufgezeichnet werden.

10. Verfahren nach einem der Ansprüche 1 bis 9, **dadurch gekennzeichnet, dass** wenigstens zwei Testkörper (20) an verschiedenen Stellen des Bauraums entweder gleichzeitig oder zeitlich beabstandet erzeugt werden.

11. Verfahren nach einem der Ansprüche 1 bis 10, **dadurch gekennzeichnet, dass** das Objekt durch schichtweises Verfestigen des Aufbaumaterials mittels elektromagnetischer oder Partikelstrahlung an den dem Objekt entsprechenden Stellen in jeder Schicht hergestellt wird.

12. Verfahren nach einem der Ansprüche 1 bis 11, **dadurch gekennzeichnet, dass** pulverförmiges Aufbaumaterial verwendet wird und als elektromagnetische Strahlung Laserstrahlung verwendet wird.

13. Verfahren nach einem der Ansprüche 1 bis 12, wobei das dreidimensionale Objekt ein funktionsfähiges Bauteile einer Serie ist und die Qualitätsprüfung des Bauteils über die Ermittlung von Eigenfrequenzen eines mit jedem Bauteil mitgebauten Testkörpers erfolgt.

14. Verfahren nach einem der Ansprüche 1 bis 13, **dadurch gekennzeichnet, dass** die Ermittlung der Eigenfrequenzen nach einmaliger Anregung erfolgt.

## Claims

1. Method of manufacturing a three-dimensional object according to which the object is built layer-wise from a building material to be solidified, where a test specimen (20) is built, wherein the test specimen (20) is built on a removable building platform (30) or at or on the object (3) to be produced with which it is connected, and wherein, after completion, it is excited to mechanical oscillations on the building platform or on the object and natural frequencies of the oscillations are determined, where material properties of the member (3) to be produced are determined from the determined natural frequencies of the test specimen (20).

2. Method according to claim 1, wherein natural frequencies are determined acoustically and/or optically and/or in an inductive manner.

3. Method according to claim 1 or 2, wherein the test specimen (20) has a geometric shape which comprises one or few dominant natural oscillation modes.

4. Method according to one of claims 1 to 3, wherein the test specimen (20) is a bar having preferably a rectangular cross section.

5. Method according to one of claims 1 to 4, wherein at least one determined natural frequency of the test specimen (20) is compared to a known natural frequency of a reference specimen.

6. Method according to one of claims 1 to 5, wherein properties of the test specimen (20), of the building process and/or of the building device are determined from the determined natural frequencies.

7. Method according to one of claims 1 to 6, wherein the building material is applied in one direction or in the opposite direction and the test specimen is built so that its main oscillation direction is essentially orthogonal to the application direction in the application plane.

8. Method according to one of claims 1 to 7, wherein an audio data file is produced in an acoustic frequency analysis and a Fourier transformation is effected in order to determine the natural frequencies.

9. Method according to one of claims 1 to 8, wherein the oscillations of the specimen are measured and recorded in a contactless manner in an optical frequency analysis, for example with a rapid distance meter.

10. Method according to one of claims 1 to 9, wherein at least two test specimens (20) are produced at different locations in the building space, either simultaneously or at timely intervals.

11. Method according to one of claims 1 to 10, wherein the object is manufactured by layer-wise solidification of the building material by means of electromagnetic radiation or particle radiation at the locations corresponding to the object in each layer.

12. Method according to one of claims 1 to 11, wherein powdery building material is used and laser radiation is used as the electromagnetic radiation.

13. Method according to one of claims 1 to 12, wherein the three-dimensional object is an operative serial member and the quality testing of the member is effected via determination of natural frequencies of a test specimen co-built with each of the members.

14. Method according to one of claims 1 to 13, wherein the determination of the natural frequencies is effected after a singular excitation.


**Revendications**

1. Procédé de fabrication d'un objet tridimensionnel, avec lequel l'objet est constitué
couche par couche à partir d'un matériau constitutif à consolider, un corps d'essai (20) étant construit, **caractérisé en ce que**
le corps d'essai (20) est construit sur une plate-forme de construction (30) extractible ou encore sur ou contre l'objet à fabriquer (3) avec laquelle ou avec lequel il est relié, et **en ce qu'**après avoir été achevé sur la plate-forme de construction ou sur l'objet, il est excité en des oscillations mécaniques et les fréquences propres des oscillations sont déterminées, les propriétés du matériau du composant (3) à fabriquer étant déterminées à partir des fréquences propres déterminées du corps de test (20).

2. Procédé selon la revendication 1, **caractérisé en ce que** les fréquences propres sont déterminées de manière sonore et/ou optique et/ou inductive.

3. Procédé selon la revendication 1 ou 2, **caractérisé en ce que** le corps d'essai (20) présente une forme géométrique qui possède un seul ou peu de modes d'oscillation propre dominants.

4. Procédé selon l'une des revendications 1 à 3, **ca-**

**ractérisé en ce que** le corps d'essai (20) est une barre ayant de préférence une section transversale rectangulaire.

5. Procédé selon l'une des revendications 1 à 4, **caractérisé en ce qu'**au moins une fréquence propre déterminée du corps d'essai (20) est comparée avec une fréquence propre connue d'un corps de référence.

6. Procédé selon l'une des revendications 1 à 5, **caractérisé en ce que** les propriétés du corps d'essai (20), du processus de construction et/ou du dispositif de construction sont déterminées à partir des fréquences propres déterminées.

7. Procédé selon l'une des revendications 1 à 6, **caractérisé en ce que** le matériau constitutif est appliqué dans une direction ou dans la direction opposée et le corps d'essai est construit de telle sorte que sa direction d'oscillation principale est orientée pour l'essentiel perpendiculairement à la direction de l'enduction dans le plan de l'enducteur.

8. Procédé selon l'une des revendications 1 à 7, **caractérisé en ce qu'**un fichier audio est généré lors d'une analyse de fréquence acoustique et une transformation de Fourier est effectuée pour la détermination des fréquences propres.

9. Procédé selon l'une des revendications 1 à 8, **caractérisé en ce que** lors d'une analyse optique de la fréquence, les oscillations du corps sont mesurées et enregistrées sans contact, par exemple avec un télémètre rapide.

10. Procédé selon l'une des revendications 1 à 9, **caractérisé en ce qu'**au moins deux corps d'essai (20) sont produits en des endroits différents de l'espace de montage, soit simultanément, soit espacés dans le temps.

11. Procédé selon l'une des revendications 1 à 10, **caractérisé en ce que** l'objet est fabriqué par consolidation couche par couche du matériau constitutif au moyen d'un rayonnement électromagnétique ou particulaire sur les endroits correspondant à l'objet dans chaque couche.

12. Procédé selon l'une des revendications 1 à 11, **caractérisé en ce que** du matériau constitutif pulvérulent est utilisé et un rayonnement laser est utilisé comme rayonnement électromagnétique.

13. Procédé selon l'une des revendications 1 à 12, selon lequel l'objet tridimensionnel est un composant en ordre de marche d'une série et le contrôle qualité du composant est réalisé par le biais de la détermination des fréquences propres d'un corps d'essai construit conjointement avec chaque composant.

**14.** Procédé selon l'une des revendications 1 à 13, **caractérisé en ce que** la détermination des fréquences propres s'effectue après une seule excitation.

Fig. 1

Fig. 2

Fig. 3

361Hz            485Hz            610Hz

Fig. 4

496Hz            620Hz            745Hz

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1486317 A1